# NEUE EUROPÄISCHE PATENTSCHRIFT

(11) **EP 0 855 226 B2**
(45) Veröffentlichungstag und Bekanntmachung des Hinweises auf die Entscheidung über den Einspruch: **24.03.2004**
(45) Hinweis auf die Patenterteilung: 06.12.2000
(21) Anmeldenummer: 97119457.6
(22) Anmeldetag: 06.11.1997
(51) Int. Cl.: B05B 15/12

(54) **Spritzkabine für Wasserlacke mit gekühlten inneren Teilen und Luftbefeuchtungseinrichtung**
Spray booth for water-based paints with cooled inner parts and air humidifier
Cabine de pulvérisation pour peintures à base d'eau avec installations intérieures refroidies et un humidificateur d'air

(30) Priorität: 19.12.1996 DE 29622072 U
(43) Veröffentlichungstag der Anmeldung: 29.07.1998
(73) Patentinhaber: Range und Heine GmbH, 72116 Mössingen (DE)
(72) Erfinder: Heine, Werner, 71364 Winnenden (DE)
(74) Vertreter: Möbus, Daniela, Dr.-Ing.

(56) Entgegenhaltungen:
- EP-A- 0 678 059
- EP-A- 0 678 335
- EP-A- 0 742 052
- DE-A- 4 114 867
- DE-A- 4 143 025
- DE-A- 4 225 503
- DE-A- 19 524 327
- US-A- 4 279 215
- US-A- 4 367 787
- US-A- 4 687 686
- US-A- 5 213 259

## Beschreibung

Die Erfindung betrifft eine Vorrichtung zum Beschichten von Gegenständen mit wasserlöslichen oder wasserverdünnbaren Beschichtungsmaterialien nach dem Oberbegriff des Anspruchs 1.

Solche Vorrichtungen sind beispielsweise zum Spritzlackieren, Spritzemaillieren, zur PTFE-Beschichtung oder zur Beschichtung mit Klebern oder dergleichen bekannt. Beim Beschichten von Gegenständen im Spritzverfahren besteht ein Hauptnachteil darin, daß die Verluste an Beschichtungsmaterial sehr hoch sind. Sie entstehen durch am Gegenstand vorbeigesprühte Anteile des Beschichtungsmaterialnebels und können zwischen 30 % und 60 % der verarbeiteten Beschichtungsmaterialien betragen. Hierdurch entstehen erhebliche Kosten und Belastungen für die Umwelt. Zur Verhinderung eines Niederschlages des als Overspray bezeichneten Lackverlustes auf Vorrichtungsteile wurde für Lackieranlagen bereits vorgeschlagen, in der Nähe der zu lackierenden Gegenstände wasserberieselte Wände anzuordnen. Auf die Wände auftreffende Partikel des Beschichtungsmaterials werden von dem Wasser mitgenommen und in Auffangwannen gesammelt. Anschließend werden der Lackschlamm und das Wasser voneinander getrennt. Der Lackschlamm muß jedoch dann entsorgt werden. Besser sind daher Verfahren, mit denen eine teilweise Rückgewinnung des Beschichtungsmaterials erzielbar ist. Eine Möglichkeit hierzu bieten Oversprayauffangsysteme. Hierzu werden in der Umgebung des Beschichtungsbereiches Vorrichtungen zum Auffangen des Oversprays angeordnet. Das auf den Vorrichtungen auftreffende Beschichtungsmaterial wird befeuchtet und in fließfähiger Form gesammelt. In der DE-OS 41 43 025 wurde auch schon ein Lackierverfahren vorgeschlagen, bei dem die Anlagenteile im Lakkierbereich unter den Taupunkt des Lacknebels gekühlt werden. Dadurch kondensiert der an den zu lackierenden Gegenständen vorbeigesprühte Lacknebel auf den Anlagenteilen und läuft an diesen herab, so dass er in einer Wanne aufgefangen und nach einer Reinigung wiederverwendet werden kann. Da sich der Taupunkt des Lacknebels jedoch in Abhängigkeit von der Umgebungstemperatur ändert, besteht die Gefahr, dass es dennoch zu einem Antrocknen des Lack-Oversprays auf den Anlagenteilen kommt. Durch die Isolationswirkung des Lackes auf der Abscheiderfläche kann die Oberflächentemperatur über den Taupunkt ansteigen, so dass der Overspray antrocknen kann.

Ferner wird in der DE-OS 41 14 867 ein Verfahren zur Klimaregelung der Zuluft für Wasserlack-Spritzkabinen vorgeschlagen, bei dem man eine zu jeder Lufttemperatur angepasste Luftfeuchte schafft, um für den Wasserlack stets dieselben Verdunstungsverhältnisse in der Kabine und somit ein einwandfreies Lakkierergebnis zu erhalten. Mit diesem Verfahren ist es jedoch nicht möglich, ein Antrocknen des Oversprays auf den Wänden der Spritzkabine zuverlässig zu verhindem, da ein solches Antrocknen nicht allein von der Lufttemperatur in der Kabine abhängt.

Der vorliegenden Erfindung liegt die Aufgabe zugrunde, eine Vorrichtung zur Beschichtung von Gegenständen zu schaffen, bei der auf einfache Weise eine nahezu vollständige Rückgewinnung der Beschichtungsmaterialien möglich ist.

Die Aufgabe wird mit einer Vorrichtung mit den Merkmalen des Anspruchs 1 gelöst. Durch die Kühlung der Vorrichtungsteile kommt es zu einer Kondensation der Luftfeuchtigkeit, wodurch die Anlagenteile mit einem dünnen Flüssigkeitsfilm überzogen werden. Bei einer Veränderung des Taupunktes an der Vorrichtung, beispielsweise durch Eigenschaften des Beschichtungsmaterials oder der Umgebung wird die erforderliche Feuchte durch zusätzliche Befeuchtungseinheiten erzielt. Dies verhindert zuverlässig das Antrocknen von Lack oder anderen Beschichtungsmaterialien wie Emaille oder aber auch von Mehrkomponentenmaterialien. Die Beschichtungsmaterialien laufen an den Vorrichtungsteilen ab oder werden durch eine weitere Vorrichtung abgerakelt. Sie können nach überprüfung wiederverwendet werden. Bei Mehrkomponentenmaterialien kommt es zur Verzögerung einer Reaktion der gemischten Komponenten, so dass auch hier eine sortenreine Rückgewinnung der einzelnen Komponenten möglich ist. Dabei können die Vorrichtungsteile vorteilhafterweise auf einen konstanten Temperaturwert unterhalb der Lufttemperatur im Beschichtungsbereich gekühlt sein. Hierdurch kann sichergestellt werden, dass auch bei unterschiedlichen Werten der Umgebungstemperatur und Luftfeuchtigkeit ein Kondensieren der Luftfeuchtigkeit an den Vorrichtungsteilen erfolgt. Es ist außerdem eine Regeleinrichtung vorgesehen, die die mindestens eine Luftbefeuchtungseinheit in Abhängigkeit von der Lufttemperatur derart regelt, dass diese stets solange Feuchtigkeit in den Beschichtungsbereich abgibt, bis die relative Luftfeuchtigkeit im Beschichtungsbereich ein Antrocknen des Oversprays verhindert. Selbst bei hohen Umgebungstemperaturen bleibt damit der Wasseranteil des Beschichtungsmaterials konstant. Ein Verdunsten der Wasseranteile des Beschichtungsmaterials ist nicht möglich, da die Umgebungsluft bereits mit Feuchtigkeit gesättigt ist. Die Temperatur der Vorrichtungsteile kann außerdem in Abhängigkeit von den verarbeiteten Beschichtungsmaterialien einstellbar sein. Auf diese Weise kann beispielsweise bei der Verarbeitung von Mehrkomponentenmaterialien die Verarbeitungszeit eingestellt werden. Ein vorzeitiges Reagieren der Komponenten läßt sich zuverlässig verhindern. Vorteilhafterweise können die Vorrichtungsteile außerdem eine Oberfläche mit Antihafteigenschaften gegenüber dem Beschichtungsmaterial aufweisen.

Nachfolgend wird ein bevorzugtes Ausführungsbeispiel einer erfindungsgemäßen Vorrichtung anhand der Zeichnung näher erläutert.

Es zeigen:
- Fig. 1: eine Ansicht von vorne auf eine erfindungsgemäße Vorrichtung;
- Fig. 2: die Vorrichtung nach Fig. 1 in der Seitenansicht.

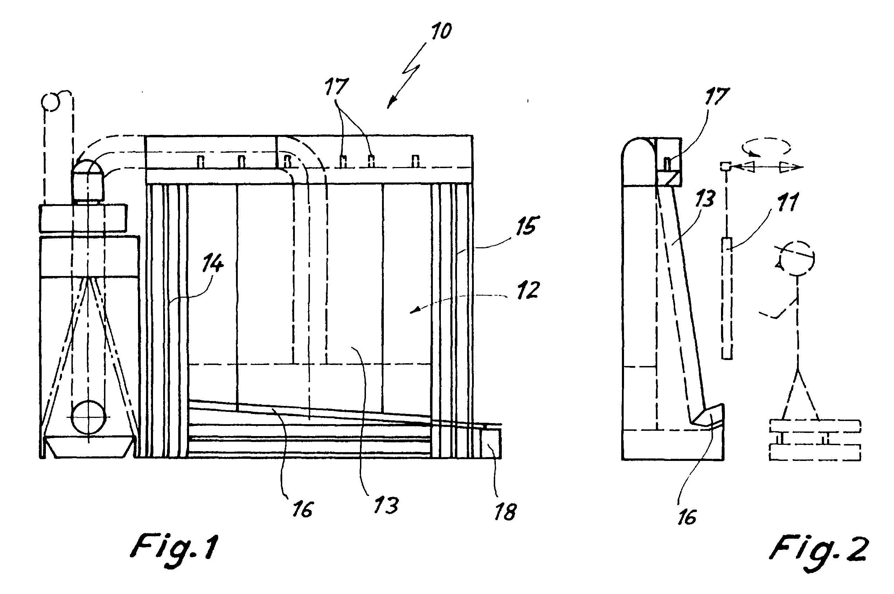

Fig. 1 zeigt eine Vorrichtung 10 zum Beschichten von Gegenständen 11 (Fig. 2) mit einem Beschichtungsbereich 12, der durch eine Auffangwand 13 sowie seitliche Absaugungen 14 und 15 begrenzt ist. Die Wand 13 endet an ihrer Unterseite in einer Auffangwanne 16. Mindestens die Wand 13, vorzugsweise aber auch die Auffangwanne 16 mit Rinne und Ablauf sind gekühlt. Oberhalb des Beschichtungsbereiches 12 sind mehrere Luftbefeuchtungsdüsen 17 angeordnet. Durch die Kühlung der Vorrichtungsteile 13 und 16 kondensiert die Luftfeuchtigkeit im Beschichtungsbereich an den Teilen 13 und 16 und bildet dort einen dünnen Wasserfilm. Wird nun, wie in Fig. 2 dargestellt, entweder von Hand oder auch maschinell ein Gegenstand 11 mit einem Nebel aus Beschichtungsmaterial besprüht, so trifft der am Gegenstand 11 vorbeisprühende Beschichtungsmaterialnebel vorerst auf die mit dem dünnen Wasserfilm überzogenen Vorrichtungsteile 13 und 16 auf. Nach Erreichen einer gewissen Schichtstärke und Überwindung der eigenen Scherkräfte läuft das Material teilweise ab, wobei das ablaufende Beschichtungsmaterial in der Auffangwanne 16 gesammelt und einem Sammelbehälter 18 zugeleitet werden kann. Nach einer Überprüfung des Beschichtungsmaterials kann dieses unmittelbar wiederverwendet werden. Die Vorrichtung 10 eignet sich dabei sowohl zum Lackieren als auch zum Emaillieren oder Beschichten mit Mehrkomponentenmaterialien. In allen Fällen ist eine sortenreine Rückgewinnung der Beschichtungsmaterialien möglich. Die noch auftretenden Materialverluste sind außerordentlich gering. Abfallkosten für Lackschlammentsorgung oder dergleichen können vollständig eingespart werden. Die Beschichtung kann dabei entweder von Hand oder auch in vollautomatischen Anlagen mit einer automatischen Auftragvorrichtung für das Beschichtungsmaterial erfolgen. Die Reinigung der Vorrichtung kann ebenfalls automatisch erfolgen.

## Patentansprüche

1. Vorrichtung zum Beschichten von Gegenständen mit wasserlöslichen oder wasserverdünnbaren Beschichtungsmaterialien, insbesondere im Spritzverfahren, mit einem Beschichtungsbereich, der durch eine Auffangwand (13) sowie setliche Absangungen (14) und (15) begrenzt ist, wobei die im Beschichtungsbereich (12) angeordneten Vorrichtungsteile (13, 16) mindestens teilweise gekühlt sind, **dadurch gekennzeichnet, dass** mindestens eine Luftbefeuchtungseinheit (17) im Beschichtungsbereich (12) vorgesehen ist und dass eine Regeleinrichtung vorgesehen ist, die die mindestens eine Luftbefeuchtungseinheit (17) in Abhängigkeit von des Lufttemperatur derart regelt, dass diese stets solange Feuchtigkeit in den Beschichtungsbereich (12) abgibt, bis die relative Luftfeuchtigkeit im Beschichtungsbereich (12) ein Antrocknen des Oversprays verhindert.

2. Vorrichtung nach Anspruch 1, **dadurch gekennzeichnet, dass** die Vorrichtungsteile (13, 16) auf einen konstanten Temperaturwert unterhalb der Lufttemperatur im Beschichtungsbereich (12) gekühlt sind.

3. Vorrichtung nach Anspruch 1 oder 2, **dadurch gekennzeichnet, dass** die Temperatur der Vorrichtungsteile (13, 16) in Abhängigkeit von den verarbeiteten Beschichtungsmaterialien einstellbar ist.

4. Vorrichtung nach einem der Ansprüche 1 bis 4, **dadurch gekennzeichnet, dass** zu ihrer Reinigung eine maschinell oder manuell bedienbare Rakel vorgesehen ist.

5. Vorrichtung nach einem der Ansprüche 1 bis 5, **dadurch gekennzeichnet, dass** die Vorrichtungsteile (13, 16) eine Oberfläche mit Antihafteigenschaften bezüglich des Beschichtungsmaterials aufweisen.

## Claims

1. Apparatus for coating objects with water soluble or water dilutable coating materials, especially in the spraying process, having a coating region which is bounded by a collecting wall (13) and by lateral suction devices (14) and (15), at least part of the apparatus parts (13, 16) arranged in the coating region (12) being cooled, **characterised in that** at least one air humidifier unit (17) is provided in the coating region (12) and that a control unit is provided which controls at least one air humidifier unit (17) in dependence upon the air temperature, such that it always delivers moisture to the coating region (12) until the relative air humidity in the coating region (12) prevents the overspray from drying on.

2. Apparatus according to claim 1, **characterised in that** the apparatus parts (13, 16) are cooled to a constant temperature value below the air temperature within the coating region (12).

3. Apparatus according to claim 1 or 2, **characterised in that** the temperature of the apparatus parts (13, 16) can be set depending upon the coating materials being used in the process.

4. Apparatus according to one of claims 1 to 4, **characterised in that** a mechanically or manually operable scraper blade is provided for cleaning it.

5. Apparatus according to one of claims 1 to 4, **characterised in that** the apparatus parts (13, 16) have an outer surface with non-stick properties with respect to the coating material.

## Revendications

1. Dispositif pour le revêtement d'objets avec des produits de revêtement solubles à l'eau ou diluables à l'eau, en particulier par pulvérisation, avec une zone de revêtement qui est délimitée par une paroi collectrice (13) ainsi que par des moyens latéraux d'aspiration (14 et 15), les parties de dispositif (13, 16) disposées dans la zone de revêtement (12) étant au moins partiellement refroidies, **caractérisé en ce qu'**au moins un module d'humidification d'air (17) est prévu dans la zone de revêtement (12), et **en ce qu'**il est prévu un dispositif de régulation qui régule le au moins un module d'humidification d'air (17) en fonction de la température de l'air de façon que celui-ci envoie continuellement de l'humidité dans la zone de revêtement (12) jusqu'à ce que l'humidité relative de l'air dans la zone de revêtement (12) empêche un séchage de l'excédent de pulvérisation.

2. Dispositif selon la revendication 1, **caractérisé en ce que** les parties de dispositif (13, 16) sont refroidies à une valeur de température constante au-dessous de la température de l'air dans la zone de revêtement (12).

3. Dispositif selon la revendication 1 ou 2, **caractérisé en ce que** la température des parties de dispositif (13, 16) est réglable en fonction des produits de revêtement mis en oeuvre.

4. Dispositif selon l'une des revendications 1 à 4, **caractérisé en ce que**, pour son nettoyage, une racle à commande mécanique ou manuelle est prévue.

5. Dispositif selon l'une des revendications 1 à 5, **caractérisé en ce que** les parties de dispositif (13, 16) possèdent une surface avec des propriétés antiadhésives par rapport au produit de revêtement.
